Europäisches Patentamt

European Patent Office

Office européen des brevets

(11) Veröffentlichungsnummer: **0 261 622**
**A2**

(12) **EUROPÄISCHE PATENTANMELDUNG**

(21) Anmeldenummer: 87113770.9

(51) Int. Cl.⁴: **F24H 1/00**

(22) Anmeldetag: 21.09.87

(30) Priorität: 22.09.86 CS 6774/86

(43) Veröffentlichungstag der Anmeldung:
30.03.88 Patentblatt 88/13

(84) Benannte Vertragsstaaten:
AT BE DE LU NL SE

(71) Anmelder: **Jednotné zemedelské druzstvo "Chovatel"**

**468 71 Lucany nad Nisou(CS)**

(72) Erfinder: **Rybar, Vaclav, Dipl.-Ing.**
**Blanicka 5**
**Prag 2(CS)**

(74) Vertreter: **Patentanwälte Beetz sen. - Beetz jun. Timpe - Siegfried - Schmitt-Fumian**
**Steinsdorfstrasse 10**
**D-8000 München 22(DE)**

(54) **Strahlungskessel.**

(57) Gegenstand der Erfindung ist ein Strahlungskessel zur Erwärmung von Flüssigkeiten durch flammenlose Verbrennung eines Brenngemisches in einer Strahlungsfüllung 12. Ein Verteiler 24 für das Brenngemisch ist zentral in der oberen Kesselstirnwand 6 gleitend gelagert. Im Mittelteil der unteren Kesselstirnwand 4 ist ein Rost 28 angeordnet, der nach aufwärts in den Verbrennungsraum hineinragt und vom Umfang zur Kesselachse gerichtete Durchtrittsöffnungen 36 für die Verbrennungsgase aufweist.

**Fig.1**

## Strahlungskessel

Die Erfindung bezieht sich auf Strahlungskessel zur Erwärmung von Flüssigkeiten durch flammenlose Verbrennung eines aus Gas und Oxidationsmittel bestehenden Brenngemisches in einer gasdurchlässigen Strahlungsstoffüllung, in welche das Brenngemisch über einen in einem Stutzen am oberen Ende des Kessels angeordneten Verteiler eingeführt wird und die mit vertikalen von der zu erwärmenden Flüssigkeit durchströmten Rohren in Berührung steht, wobei am unteren Ende des Kessels ein Rost angebracht ist.

Bei einem derartigen Strahlungskessel strömt das Brenngemisch aus dem Verteiler in eine Zünd- und Überwachungskammer, die mit einem Zündorgan und mindestens einem Flammenfühler (z.B. Ionisationsfühler) ausgestattet ist. Diese Kammer ist so bemessen, daß in ihr lediglich die Zündung des Brenngemisches und eine Anzeige der Flamme stattfindet, jedoch das Brenngemisch noch nicht in vollen Brand gerät. Das entzündete Brenngemisch trifft auf das die untere Begrenzung der Zünd-und Überwachungskammer bildende freie obere Niveau der körnigen StrahlungsstoffFüllung und tritt mit hoher Geschwindigkeit in die selbe ein, wo eine flammenlose Verbrennung vor sich geht. Im oberen Teil der Strahlungsstoff-Füllung bildet sich eine Glutzone, in der der größte Anteil der Wärme auf Wärmetauschflächen (Rohre) durch Strahlung übertragen wird, wonach die Temperatur der Brennprodukte sehr schnell sinkt, so daß die Verbrennungsabgase am Unterende des Kessels bereits auf eine gewünschte niedrige Temperatur abgekühlt sind. Die Strömungsgeschwindigkeit des Brenngemisches beim Einströmen in die Glutzone des Verbrennungsraumes ist größer als die Flammenausbreitungsgeschwindigkeit.

Bei der Konstruktion eines zuverlässigen Strahlungskessels mit hohem Wirkungsgrad müssen manche seiner besonderen Eigenschaften berücksichtigt werden, die bestimmte Probleme mit sich bringen.

Vor allem ist dies die in der Glutzone der Strahlungsstoff-Füllung entstehende sehr hohe Temperatur von etwa 1700 bis 1800 °C. Die Glutzone beginnt nur einige Zentimeter unterhalb des oberen Niveaus der Füllung und die Wärme breitet sich aus derselben durch Strahlung nicht nur auf die seitlichen Wärmetauschflächen, sondern auch aufwärts auf diejenigen Kesselteile aus, die die obere Begrenzung seines Verbrennungsraumes bilden.

Vorbedingungen für eine richtige Betriebsweise eines Strahlungskessels sind der Durchstrom der Brenngase durch den ganzen Kessel mit möglichst geringem Widerstand, ein möglichst intensiver Wärmeübergang aus der Strahlungsstoff-Füllung auf die Wärmetauschflächen, der in allen Querschnitten des Verbrennungsraumes möglichst gleichmäßig sein soll, eine vollkommene Ausnützung der Wärme der Brenngase und ein möglichst geräuschloser Betrieb. Diesen Forderungen muß die ganze Konzeption des Kessels untergeordnet werden. Insbesondere ist es erforderlich, daß zwischen den Körnern der Strahlungsstoff-Füllung stets unbeschädigte Strömungsbahnen für die Gase aufrechterhalten bleiben, d.h. ein Zusammensintern der Körper ausgeschlossen wird.

Bei derartigen Strahlungskesseln wird das Brenngemisch durch einen zentralen Verteiler zugeführt, der als selbständige Kugelhaube ausgeführt ist und durch Andrücken an eine Dichtungsunterlage zwischen der oberen Stirnwand des Kessels und einem Flansch des zentralen an die Stirnwand des Kessels festgeschraubten Rohres befestigt ist. Der Verteiler ist demnach auch der hohen Temperatur ausgesetzt. Nach einem längeren Betrieb hat sich gezeigt, daß die durch keramische Kugeln oder Rollen gebildeten Teilchen zusammensintern und/oder deformiert werden, was den Durchstrom der Brenngase beeinträchtigt und ·den vom Gebläse zu überwindenden Strömungswiderstand erhöht.

Die wahrscheinliche Ursache dieser unerwünschten Erscheinung dürfte die Flüssigkeit sein, die in den Verbrennungsraum durch mikroskopische Risse in der oberen Stirnwand des Kessels aus dem über dieser Stirnwand angeordneten Flüssigkeitssammler eindringt. Diese Mikrorisse entstehen durch Wärmedehnung des Verteilers, der in der Stirnwand des Kessels befestigt ist und sich bei den sehr hohen Betriebstemperaturen teilweise verformt, wodurch sehr große Kräfte auf seine Lagerung in der Stirnwand ausgeübt werden, welche die Mikrorisse insbesondere im Bereich seiner Befestigungszonen (Schweißnähte) hervorrufen.

Eine weitere Besonderheit der Strahlungskessel ist die außergewöhnlich hohe Geschwindigkeit, mit der das gasförmige Brenngemisch durch die Strahlungsfüllung strömt. Dies stellt große energetische Anforderungen an das Gebläse, so daß der Strömungswiderstand der Füllung auf ein Minimum herabzusetzen ist. Ein verhältnismäßig großer Strömungswiderstand existiert im Unterteil des Kessels, wo die Brennprodukte aus dem Verbrennungsraum in die Austrittsleitung übergehen. In dieser entstehen auch hauptsächlich die relativ lauten Betriebsgeräusche bekannter Strahlungskessel.

Eine weitere Besonderheit bei Strahlungskesseln liegt in der radialen Temperaturverteilung innerhalb der einzelnen Querschnitte der Strahlungsfüllung: Der höchste Wirkungsgrad wird erreicht, wenn über jeder Querschnittszone der Strahlungsfüllung etwa die gleiche Temperatur herrscht, d.h. wenn jede Querschnittsfläche eine isotherme Fläche bildet. In der Praxis ist es jedoch unvermeidlich, daß an den Kontaktflächen der Füllung mit den Wärmetauscherflächen und am Umfang des Kessels die Temperatur niedriger als im Zentrum des Kessels bzw. zwischen den eingebauten Wärmetauschflächen ist, wo ein heißer Kern existiert. Je kürzer dieser Kern ist, desto geringer kann die Höhe der Füllung und deshalb auch die Bauhöhe des Kessels sein. Für Kessel geringer Leistungen genügen zur Abfuhr der erzeugten Wärme Wärmetauschflächen am Umfang des Kessels, die durch Rohre, einen doppelwandigen Mantel, Ringe oder jedwede andere Wärmetauschflächen gebildet sein können. Für Kessel größerer Leistungen genügen jedoch die Umfangs-Wärmetauschflächen nicht mehr, da der Kern zu hoch wäre. Deshalb müssen in die Strahlungsfüllung Wärmetauschflächen eingebaut werden.

Bei den bekannten Kesseln ist ein gleichmäßiger quantitiver Flüssigkeitszufluß nicht gewährleistet. Der Umfangsmantel führt vielfach mehr Flüssigkeit als die Einbauten, die Drosselstellen aufweisen. Die Folge ist ein Überhitzen und Verdampfen der Flüssigkeit in diesen Stellen sowie eine ungleichmäßige Flüssigkeitstemperatur im Sammelbehälter. Da in diesem Behälter die den Kesselbetrieb steuernden Thermostaten angebracht sind, beeinträchtigt diese ungleichmäßige Temperaturverteilung den Betrieb des Kessels.

Aufgabe der Erfindung ist es, einen Strahlungskessel mit flammenloser Verbrennung zu schaffen, der in Querschnittszonen eine gleichmäßige Temperaturverteilung, über seine Länge einen verringerten Strömungswiderstand, einen intensivierten Wärmeaustausch auf das zu erwärmende Fluid aufweist und schließlich nur geringe Betriebsgeräusche verursacht.

Diese Aufgabe wird gemäß der Erfindung dadurch gelöst, daß der Verteiler des Brenngemisches in seiner Lagerung gleitbar angeordnet ist, daß der kleinere Abmessungen als der Querschnitt des Verbrennungsraumes des Kessels aufweisende Rost im Mittelteil des Kesselbodens liegt und gegenüber derselben aufwärts in den Verbrennungsraum ragt und daß im Rost vom Kesselumfang radial nach innen gerichtete Durchtrittsöffnungen vorgesehen sind.

Bei Kesseln höherer Leistungen werden außer den an der Kesselperipherie angeordneten Wärmetauschflächen noch Wärmetauschrohre verwendet, die in die Strahlungsfüllung eingebaut sind. Einige oder alle Rohre sind in Richtung zur Kesselachse gebogen, wodurch die Wärmetauschflächen der Rohre möglichst nahe an den heißen Kern der Strahlungsfüllung gebracht werden und eine gleichmäßigere radiale Verteilung der Temperatur über den Querschnitt der Füllung erzielt wird. Auf diese Weise wird die Temperatur des Kernes verringert und der Temperaturgradient in einzelnen Querschnitten der Füllung dem optimalen isothermen Verlauf angenähert, wodurch die Gefahr einer Sinterung der Füllungsteilchen verringert wird, was zur Aufrechterhaltung von unbeschädigten Kanälen zwischen den Füllungsteilchen beiträgt.

Jedes Rohr des Einbaues sowie des Umfangsmantels hat seinen eigenen Ein-und Austritt, d.h. jedes Rohr führt von der unteren Kammer direkt in den Sammelbehälter. Ferner sind die Einbaurohre in bezug auf die Umfangsrohre derart bemessen, daß die Flüssigkeit in ihnen auf gleiche Temperaturen wie in den Mantelrohren erwärmt und dadurch eine Homogenisierung der Flüssigkeitstemperatur im Sammelbehälter erzielt wird. Sowohl die Einbau-als auch die Mantelrohre können in ihrem Oberteil mit äußeren Längsrippen versehen werden, um die Wärmetauschflächen im heißen Teil der Strahlungsfüllung zu vergrößern.

Die erfindungsgemäße Anordnung des Rostes ist von besonderer Bedeutung. Der geringste Strömungswiderstand besteht in der Nähe der Mantelrohre und ihren Verbindungsstegen, da an diesen Stellen die Durchströmkanäle zwischen den Füllungsteilchen und den Rohr-und Stegwänden größer als im Inneren des Verbrennungsraumes sind, wo die Füllungsteilchen unregelmäßig aufeinander gehäuft sind. Wenn sich der Gasauslaß im unteren Teil des Mantelumfangs befindet, können die Gase seitlich unmittelbar in die Auslaßleitung entweichen. Bei Kesseln mit dem Gasauslaß in der Kesselachse können die Gase unmittelbar unten aus dem Kessel entweichen. Im ersten Fall entsteht im unteren Teil des Verbrennungsraumes in der Kesselachse eine höhere Temperatur als in der Umgebung, so daß sich dort gewissermaßen ein sekundärer heißer Kern bildet und im zweiten Falle entweichen heiße Gase nutzlos aus dem Kessel. Beides ist nachteilig, weil dadurch der Wirkungsgrad des Kessels verringert wird.

Bei dem erfindungsgemäß ausgebildeten Rost werden die an den Mantelrohren und Verbindungsstegen.strömenden Gase zwangsweise in die horizontale Richtung gegen die seitlichen Durchtrittsöffnungen im Rost umgelenkt und geben dabei die restliche Wärme an die Wärmetauschflächen ab.

Durch die erfindungsgemäße Kesselausbildung werden mehrere Vorteile erzielt. Eine Beschädigung der Stirnwand des Kessels durch Ausdehnung des Verteilers wird vermieden und das Eindringen von Flüssigkeit in die Strahlungsfüllung begleitet von einer Deformation der Füllungskörper ausgeschlossen. Diese Gefahr wird noch weiter durch Biegen der Einbaurohre in Richtung zur Kesselachse und ggf. durch die Längsrippen ver ringert, wodurch die Temperatur an diesen Stellen herabgesetzt wird. Zugleich wird der Temepraturverlauf dem Idealzustand genähert, bei dem jede Querschnittsfläche der Strahlungsfüllung eine isotherme Fläche darstellt. Ferner wird eine Erhöhung des Strömungswiderstandes durch die Strahlungsfüllung vermieden und dieser Widerstand wird durch die erfindungsgemäße Anordnung des Gasauslasses seitlich aus dem Unterteil des Verbrennungsraumes noch weiter vermindert.

Von besonderer Bedeutung ist auch eine erfindungsgemäße Kesselanordnung zum Erhalt von HochleistungsKesseln. Die Abmessungen der Strahlungskessel können nicht beliebig vergrößert werden, da bestimmte Verhältnisse zwischen den Wärmetauschflächen der zwischen denselben liegenden Teile der Füllung, der Charakteristik des Gemischverteilers und weiteren Parametern des Kessels eingehalten werden müssen. Es wurde bereits vorgeschlagen, für höhere Leistungen mehrere selbständige Kessel zu einer Batterie zusammenzustellen, doch hat sich diese Anordnung nicht bewährt. Ein weiterer Vorschlag ging dahin, mehrere komplette Kessel in einem mit Flüssigkeit gefüllten Behälter anzuordnen, welche die Außenwände der Kesselmäntel umspült. Keine dieser Lösungen hat sich jedoch bewährt.

Gemäß den obigen Ausführungen bilden die Wärmetauschrohre, der Gemischverteiler, die Füllung und der Rost das Heizsystem des Kessels. Dieses System ist mit den üblichen Steuer-und Sicherheitsorganen sowie einer Zündvorrichtung usw. versehen. Gemäß einem weiteren Merkmal der Erfindung werden mehrere derartige Systeme in einem gemeinsamen, von Umfangsrohren umgebenen Verbrennungsraum untergebracht und zwischen die einzelnen Heizsysteme wird eine Gruppe von Zwischenrohren eingeschaltet.

Im folgenden werden Ausführungsbeispiele der Erfindung anhand der Zeichnung im einzelnen beschrieben. Es zeigen:

Fig. 1 einen Strahlungskessel im Axialschnitt,

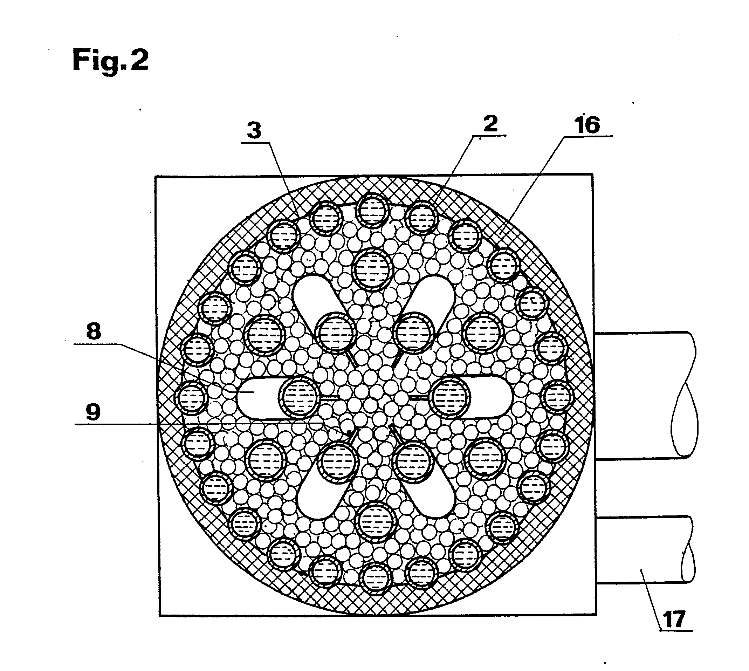

Fig. 2 einen Querschnitt II-II des Kessels nach Fig. 1,

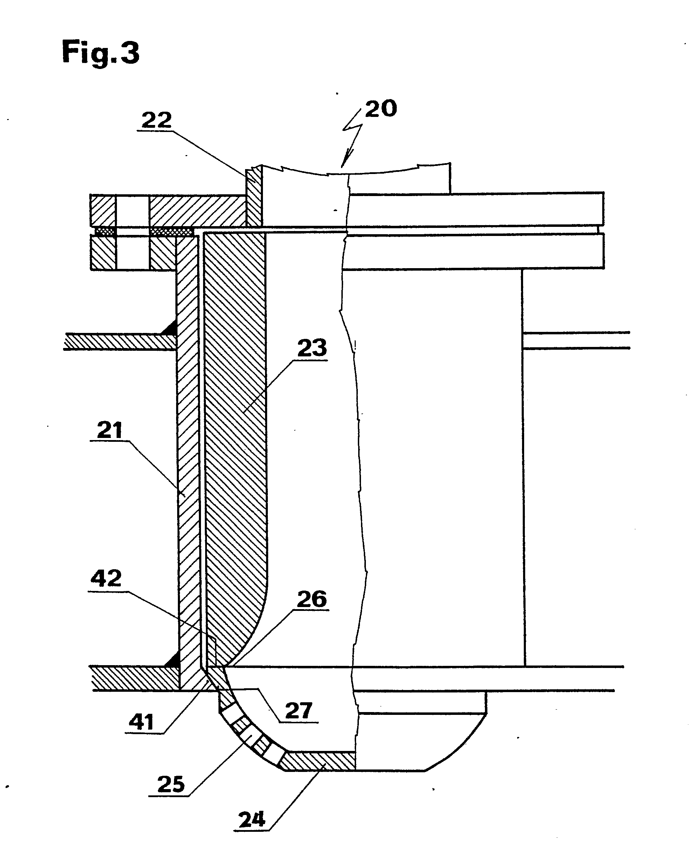

Fig. 3 den Gemischverteiler in größerem Maßstab,

Fig. 4 den Rost im axialen Teilschnitt,

Fig. 5 den Rost im Grundriß,

Fig. 6 einen horizontalen Querschnitt durch einen Kessel mit zwei Heizsystemen für höhere Leistung,

Fig. 7 einen horizontalen Querschnitt durch einen Hochleistungskessel mit vier Heizsystemen.

Der dargestellte Kessel weist einen vorzugsweise zylindrischen Mantel 1 aus einem System von achsparallelen vertikalen Mantelrohren 2 auf, die durch angeschweißte Verbindungsstege 3 miteinander verbunden sind. Obwohl ein kreisförmiger Querschnitt sich als vorteilhaft erwiesen hat, ist die Erfindung keineswegs auf diese Ausgestaltung beschränkt, vielmehr kann der Kessel jedweden anderen Querschnitt haben, z.B. quadratisch, rechteckig, elliptisch und dergleichen sein. Die Mantelrohre 2 sind unten in einer Bodenwand 4 eingeschweißt, welche eine untere Kammer 5 für die Zufuhr kühler Flüssigkeit nach oben begrenzt. Die oberen Enden der Mantelrohre 2 sind in ähnlicher Weise in einer oberen Stirnwand 6 befestigt, welche die untere Begrenzung eines Sammelbehälters 7 für die erwärmte Flüssigkeit bildet. Außer den Umfangsrohren 2 sind bei Kesseln von größeren Ausmaßen Rohre 8 eingebaut, die näher zur Kesselachse 0 liegen und ebenfalls in der unteren Stirnwand 4 und oberen Stirnwand 6 eingeschweißt oder z.B. durch Aufweiten gasdicht befestigt sind. Diese Einbaurohre 8 sind in ihrem mittleren bzw. oberen Abschnitt zur Kesselachse 0 hin gebogen. Falls mehrere Systeme von Einbaurohren 8 verwendet werden, können die von der Achse 0 weiter entfernten Rohre gerade sein.

Der Innenraum des Kessels, d.h. sein Verbrennungsraum 12, ist mit einer aus einzelnen Körpern, z.B. Kugeln, Rollen oder dergleichen, bestehenden Strahlungsfüllung 13 bis zu dem oberen Niveau 14 gefüllt, über welchem eine Zünd-und Überwachungskammer 15 liegt, in welcher ein nicht dargestelltes Zündorgan, ein Flammenindikator (Ionisationsfühler), ggf. ein Druckfühler und ein Beobachtungsfenster angeordnet sind. Der Kessel ist von einem Isoliermantel 16 umgeben. Am Unterende des Kessels mündet in die untere Kammer 5 eine Flüssigkeitszufuhr 17; die Flüssigkeit entweicht nach Erwärmung aus dem Sammelbehälter 7 durch eine Auslaßleitung 18. Im oberen Teil der Füllung 13 bzw. oberhalb derselben kann ein Deflektor 19 angebracht sein, dessen wirksame Fläche sich nach unten verbreitert und somit die Gasströmung zur Peripherie des Kessels ablenkt. In der oberen Stirnwand 6 ist in der Achse 0 eine Brenngemischzufuhr 20 vorgesehen.

In einem an eine Zufuhrleitung 22 angeschlossenen Stutzen 21 ist eine Distanzeinlage 23 eingelegt, die mit ihrer Unterfläche 42 auf der Oberfläche 26 des Verteilers 24 aufliegt. Dieser Brenngemisch-Verteiler 24 hat in seinem aktiven Teil die Gestalt einer teilweise kugelförmigen Kappe und ist mit einem System von Öffnungen 25 versehen. Die gesamte Querschnittsfläche dieser Öffnungen 25 ist kleiner als die Querschnittsfläche der Öffnung in der Distanzein lage 23. Der Verteiler 24 liegt mit seinem aktiven Teil im freien Raum der Zünd-und Überwachungskammer 15. In den Öffnungen 25 wird die Geschwindigkeit des strömenden Brenngemisches auf einen Wert gebracht, der weitgehend oberhalb der Geschwindigkeit der Flammenausbreitung im Brenngemisch liegt. Durch die Öffnungen 25 wird das Brenngemisch gezielt auf das obere Niveau 14 der Strahlungsfüllung 13 verteilt.

Die Distanzeinlage 23 ist im Stutzen 21 mit einem axialen sowie radialen Spielraum eingesetzt, so daß sie sich axial frei bewegen und bei Erwärmung frei ausdehnen kann, ohne dabei den Stutzen 21 zu belasten. Am oberen Rand des Verteilers 24 ist außen eine Auflagefläche 27 zweckmäßig von konischer Gestalt vorgesehen, die auf einem zweckmäßig konischen Sitz 41 aufliegt, der als innerer Ringansatz ausgebildet und am unteren Ende des Stutzens 21 gegenüber der Auflagefläche 27 angeordnet ist. Der Neigungswinkel der konischen Flächen ist so gewählt, daß sie Gleitflächen bilden, an welchen sich der Verteiler 24 bei einer Wärmeausdehnung frei aufwärts bewegen kann und dabei die Distanzeinlage 23 anhebt. Dadurch wird jede Beanspruchung der Teile der Brenngemischzufuhr 20 und ihrer Umgebung ausgeschlossen und die Bildung von Mikrorissen vermieden. Ein weiterer Vorteil liegt darin, daß der Verteiler 24 und die Distanzeinlage 23 von oben in den Stutzen eingelegt und - falls erforderlich - auf einfache Weise ausgetauscht werden können.

Im Mittelteil der unteren Stirnwand 4 ist ein Rost 28 vorgesehen, der nach oben in den Verbrennungsraum 12 hineinragt. Der Rost 28 enthält eine Deckplatte 29, unter der in Abständen, die kleiner als die Abmessungen der Teilchen der Strahlungsfüllung 13 sind, Ringe 31 vorgesehen sind, die z.B. durch vertikale Befestigungsstäbe 32 miteinander und mit der Deckplatte 29 fest verbunden sind. Der Außendurchmesser des Rosts 28 ist kleiner als der Durchmesser einer Öffnung 33 in der unteren Stirnwand 4, so daß er von unten durch das Austrittsrohr 34 in den Kessel eingelegt werden kann. An den Rostrand sind unten Sockel 35 angeschweißt, die beim Einlegen des Rostes durch nicht dargestellte Ausschnitte in der unteren Stirnwand 4 hindurchtreten können und nach dem Einlegen gedreht und dadurch in der gewünschten Lage festgehalten werden. In ähnlicher Weise wird der Rost herausgenommen.

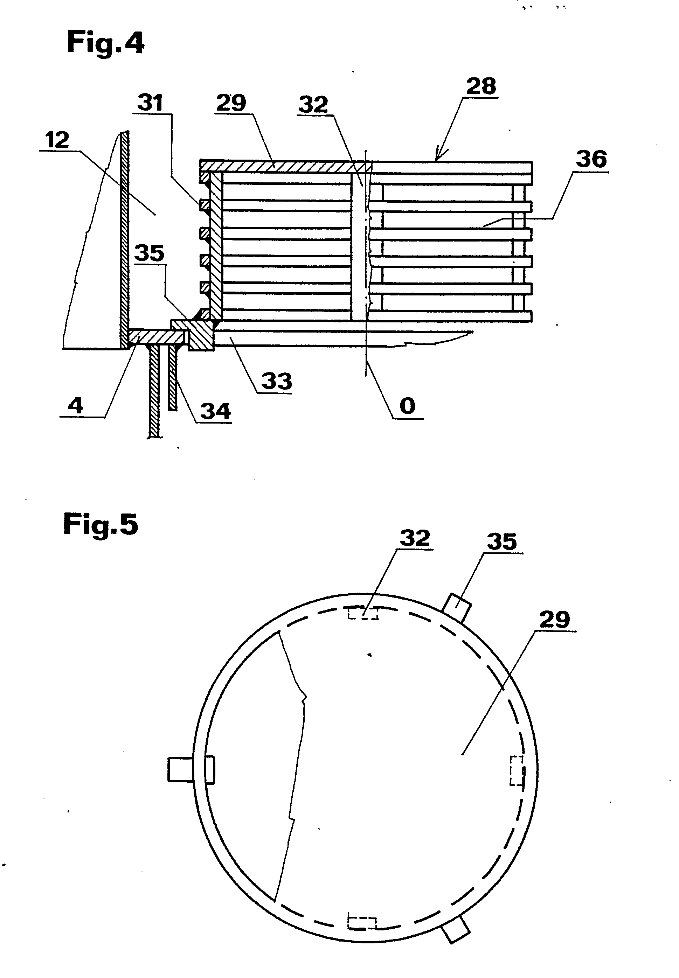

Dadurch werden symmetrische seitliche Durchströmschlitze bzw. -öffnungen 36 für den Auslaß der Verbrennungsgase aus dem Verbrennungsraum 12 gebildet, die von der Peripherie zur Kesselachse 0 gerichtet sind, wodurch eine sehr große Durchströmfläche gewonnen wird. Dadurch werden der Strömungswiderstand und die Gebläseleistung verringert. Die den Rost 28 oben abdeckende Deckplatte kann voll sein, wie in Fig. 5 dargestellt. Falls erforderlich können in derselben nicht dargestellte Durchströmöffnungen vorgesehen werden, um auch einen axialen Austritt der Gase und eine weitere Vergrößerung der Durchströmfläche zu ermöglichen.

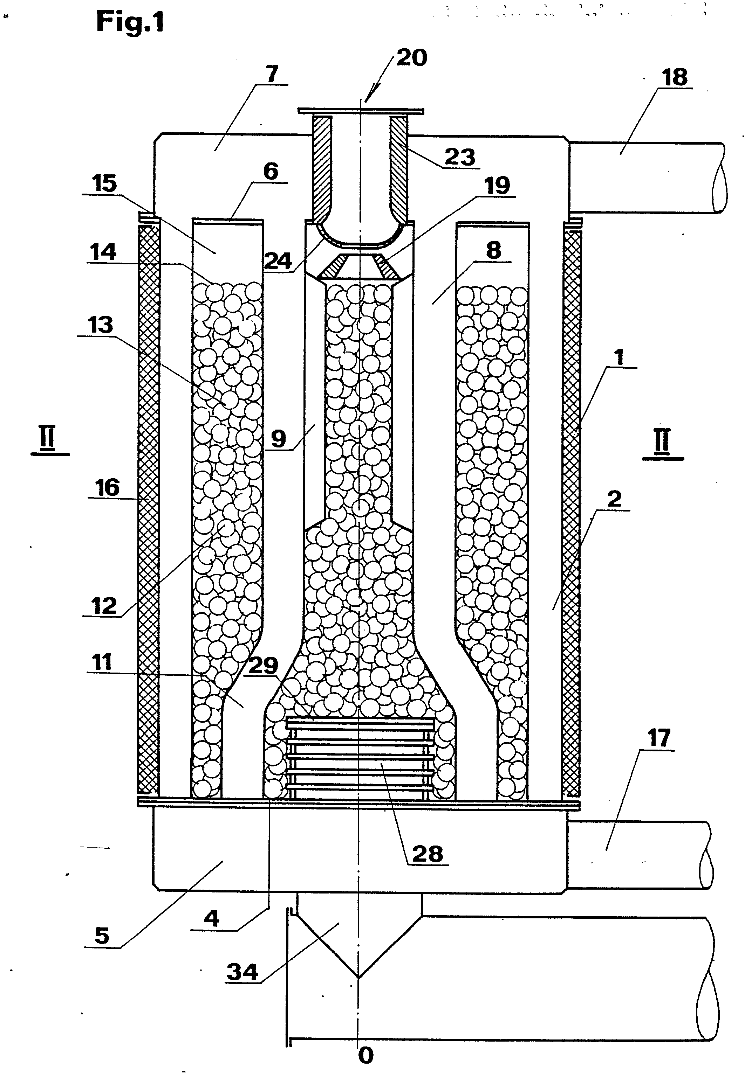

Obwohl in der Zeichnung nur ein System von Einbaurohren 8 dargestellt ist, können je nach der Kesselleistung mehrere solche Systeme symmetrisch angeordnet werden, wobei z.B. in einem System die Rohre 8, gemäß Fig. 1, gebogen und in einem weiteren System gerade sein können. Auch die Durchmesser der Rohre 8 sowie der Umfangsrohre 2 können unterschiedlich sein. Insbesondere ist es vorteilhaft, Einbaurohre 8 mit einem größeren Durchmesser als die Umfangsrohre 2 zu verwenden.

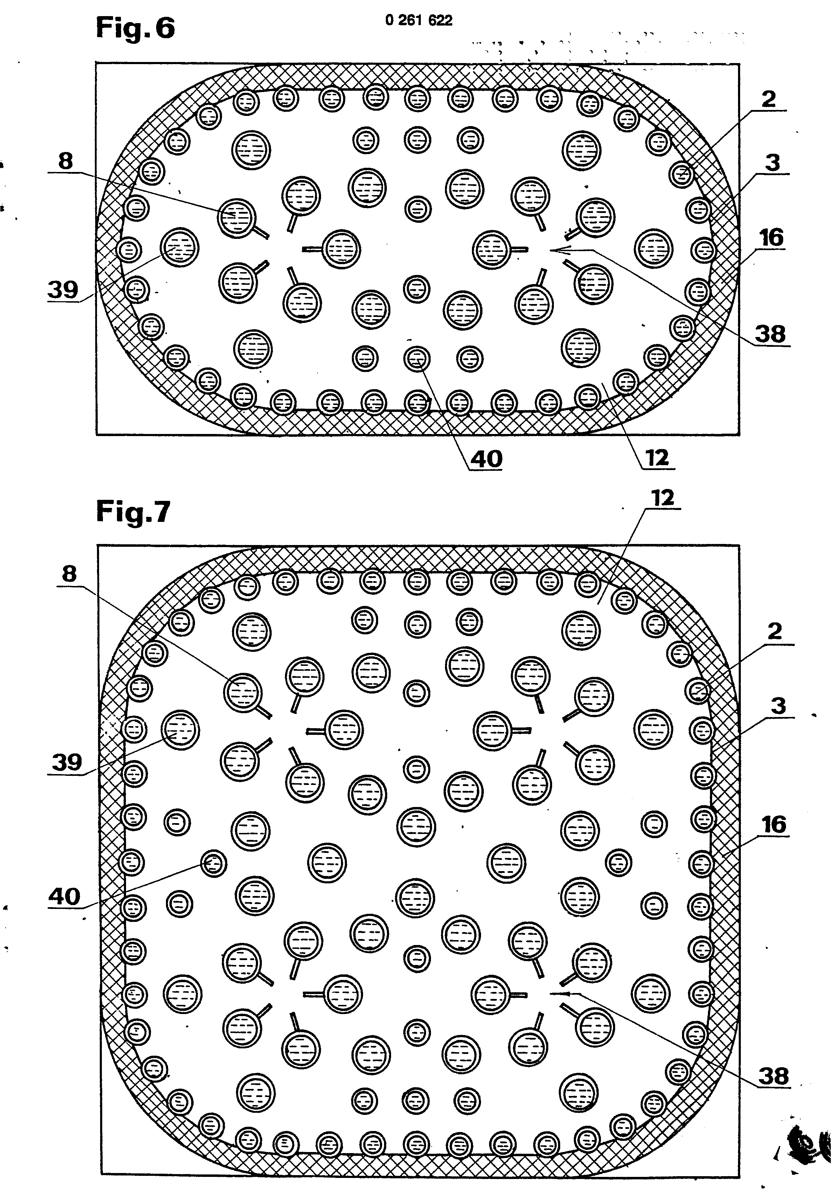

Der in Fig. 6 dargestellte Kessel für höhere Leistungen weist einen Verbrennungsraum 12 mit einer Strahlungsfüllung und an seinem Umfang Mantelrohre 2 mit Verbindungsstegen 3 auf. Im Verbrennungsraum 12 sind zwei Heizsysteme 38 angeordnet, die im wesentlichen wie das vorstehend beschriebene Heizsystem aufgebaut sind. Jedes System weist einen Ring von gegenüber der Achse gebogenen Einbaurohren 8 und außerdem noch einen Ring von Außenrohren 39 auf, der konzentrisch zu dem Ring der Rohre 8 ist. Die Außenrohre 39 sind geradlinig und führen gleichfalls von der unteren Kammer 5 (hier nicht dargestellt) unmittelbar in den Sammelbehälter 7. Jedes Heizsystem 38 weist einen eigenen Brenngemischverteiler 24, eine Zünd-und Überwachungskammer 15 mit Hilfsorganen und einen Rost 28 samt einem Austrittsrohr 34 auf. Zwischen den beiden Heizsystemen 38, 38 sind Zwischenrohre 40 eingebaut, die gleichfalls von der unteren Kammer 5 unmittelbar in den Sammelbehälter 7 führen.

Fig. 7 zeigt einen ähnlichen Kessel mit vier Heizsystemen 38 wie die Fig. 6.

Bei diesen Hochleistungs-Kesseln ist es wichtig, daß alle Heizsysteme 38 in einem einzigen gemeinsamen Verbrennungsraum 12 untergebracht sind.

Der erfindungsgemäße Kessel arbeitet folgendermaßen:

Das durch den Einlaßstutzen 20 einströmende Gemisch wird durch die Öffnungen 25 im Verteiler 24 auf das obere Niveau 14 der Strahlungsfüllung 13 gleichmäßig verteilt und beim Durchgang durch die Zünd-und Überwachungskammer 15 gezündet, wonach es sofort mit hoher Geschwindigkeit in die Strahlungsfüllung 13 eintritt, an deren Teilchen eine flammenlose Oberflächenverbrennung stattfindet.

Dabei entsteht in einer Entfernung von nur einigen Zentimetern unter dem oberen Niveau 14 eine glutheiße Zone mit Temperaturen von 1700 bis 1800 °C, in welcher der Großteil der Wärmeenergie an die Umfangsrohre 2 und Einbaurohre 8 abgestrahlt wird. In diesen Rohren fließt die Flüssigkeit von der unteren Kammer 5 in den oben angebrachten Sammelbehälter 7. Die geeignete Wahl der Zwischenabstände und der Abmessungen Rohre 2 und 8 gewährleistet, daß die in den Sammelbehälter 7 eintretende Flüssigkeit durchwegs die gleiche Temperatur aufweist, so daß im Sammelbehälter 7 eine homogene Flüssigkeitstemperatur herrscht, was für die Wirkungsweise des Kessels wichtig ist, da sich im Sammelbehälter 7 die nicht dargestellten Thermostaten befinden.

Die Brenngase bwegen sich nach unten und übertragen die Restwärme an die Rohre 2 und 8, so daß die Temperatur im Kessel rasch absinkt und die Gase am Unterende des Kessels bereits auf die geforderte Austrittstemperatur abgekühlt sind.

Zwischen den Teilchen der Strahlungsfüllung 13 und den Rohren, insbesondere den Umfangsrohren 2 und den Verbindungsstegen 3 sind größere Durchtrittskanäle als zwischen den im Inneren des Verbrennungsraumes angehäuften Teilchen der Strahlungsfüllung 13 vorhanden, so daß an diesen Stellen die Gase leichter durchströmen können. Um einen Wärmeabfluß durch die Gasanteile zu verhindern, ist erfindungsgemäß der Rost 28 derart angeordnet, daß diese Gase im unteren Teil des Kessels zwangsweise vom Umfang nach radial innen umgeleitet werden und die seitlichen Durchtrittsöffnungen 36 im Rost 28 durchströmen. Dabei geben sie die restliche Wärme an die Wärmetauschflächen ab.

Der mitunter hen Temperaturen ausgesetzte Verteiler 24 dehnt sich durch die Erwärmung aus, was eine Gleitbewegung entlang den konischen Flächen 27 und 41 bewirkt, ohne daß Beschädigungen der Kesselteile auftreten. Dabei wird die Distanzeinlage 23 angehoben. Falls erforderlich, kann zwischen die Distanzeinlage 23 und die Zufuhrleitung 22 eine nicht dargestellte nachgiebige Unterlage eingelegt werden, damit die Distanzeinlage 23 im Stutzen 21 nicht zu lose gehalten ist.

In allen Rohren 2, 8 sind Mischpropeller eingelegt, die der Flüssigkeit eine Rotationsbewegung erteilen, bei der die an den Rohrwänden gebildeten Dampfblasen als die leichtere Komponente infolge der Zentrifugalkraft gegen die Achsen der Rohre 2 und 8 befördert werden, von wo sie aufwärts in den Sammelbehälter 7 frei entweichen können, ohne störend zu wirken.

Die Vergrößerung der Wärmetauschflächen der Rohre durch Längsrippen, besonders in der heißen Zone, ermöglicht eine intensive Wärmeabfuhr aus der Strahlungsfüllung 13 in die Rohre 2 und 8.

Obwohl der erfindungsgemäße Kessel vorwiegend zur Erwärmung von Flüssigkeiten bestimmt ist, kann er auch zur Erwärmung von Dampf oder Gasen verwendet werden.

Verzeichnis der Bezugszeichen

1 Kesselmantel
2 Umfangsrohre
3 Verbindungsstege
4 untere Stirnwand
5 untere Kammer
6 obere Stirnwand
7 Sammelbehälter
8 eingebaute Rohre
9 Längsrippen
11 Unterteil der gebogenen Rohre
12 Verbrennungsraum des Kessels
13 Strahlungsfüllung
14 oberes Niveau der Strahlungsfüllung
15 Zünd-und Überwachungskammer
16 Isoliermantel
17 Flüssigkeitszufuhr
18 Austritt der erwärmten Flüssigkeit
19 Deflektor
20 Brenngemischzufuhr
21 Stutzen
22 Zufuhrleitung
23 Distanzeinlage
24 Brenngemischverteiler
25 Öffnungen
26 obere Fläche des Verteilers
27 Auflagefläche
28 Rost
29 Deckplatte
31 Ringe
32 Befestigungsstreifen
33 Öffnung
34 Austrittsrohr
35 Sockel
36 seitliche Durchlaßöffnungen
37 Mischpropeller
38 Heizsystem
39 Außenrohre
40 Zwischenrohre
41 Sitz
42 untere Fläche der Distanzeinlage

## Ansprüche

1. Strahlungskessel zur Erwärmung von Flüssigkeiten durch flammenlose Verbrennung eines aus Gas und Oxidationsmittel bestehenden Brenngemisches in einer gasdurchlässigen Strahlungsstoff-Füllung, in die das Brenngemisch über einen Verteiler eingeführt wird und die von der zu erwärmenden Flüssigkeit durchflossene Rohre kontaktiert, wobei am unteren Ende des Kessels ein Rost angeordnet ist,
**dadurch gekennzeichnet,**
daß der Verteiler (24) des Brenngemisches gleitend gelagert ist,
daß der kleinere Abmessungen ale der Querschnitt des Verbrennungsraumes (12) aufweisende Rost (28) auf dem Mittelteil der unteren Kessel-Stirnwand (4) liegt und aufwärts in den Verbrennungsraum (12) hineinragt und daß im Rost (28) vom Kesselumfang zur Kesselachse (0) gerichtete Durchströmöffnungen (36) vorgesehen sind.

2. Strahlungskessel nach Anspruch 1, dadurch gekennzeichnet, daß zumindest einige der im Verbrennungsraum (12) angeordneten Einbaurohre (8) in ihrem unteren Teil in Richtung zur Kesselperipherie gebogen sind.

3. Strahlungskessel nach Anspruch 1 oder 2, dadurch gekennzeichnet, daß mindestens ein Einbaurohr (8) in seinem oberen Teil mindestens eine äußere Längsrippe (9) aufweist.

4. Strahlungskessel nach Anspruch 1 bis 3, dadurch gekennzeichnet, daß der napfförmige perforierte Verteiler (24) oberhalb seiner Auflagefläche (27) eine ringförmige Stirnfläche (26) aufweist und daß in einem den Verteiler (24) über konische Gleitflächen (27, 41) tragenden Stutzen (21) eine sich nach unten bogenförmig erweiternde Distanzeinlage (23) mit radialem und axialem Spiel gelagert ist, die mit ihrer unteren Ringfläche (42) auf der Stirnfläche (26) aufliegt.

5. Strahlungskessel nach Anspruch 1 bis 4, dadurch gekennzeichnet, daß der Rost (28) aus einem System von parallelen Rostringen (31) besteht, die unterhalb einer Deckplatte (29) in geringeren Abständen als die Teilchengröße der Strahlungsfüllung (13) angeordnet sind und symmetrische Ausströmöffnungen (36) für die Verbrennungsgase aus dem Verbrennungsraum (12) bilden.

6. Strahlungskessel nach Anspruch 1 bis 5, dadurch gekennzeichnet, daß in der Deckplatte (29) Durchströmöffnungen für den axialen Auslaß der Verbrennungsgase vorgesehen sind.

7. Strahlungskessel nach Anspruch 1 bis 6, dadurch gekennzeichnet, daß der Rost (28) einen kleineren Durchmesser als die Öffnung (33) in der unteren Stirnwand (4) aufweist und mit Sockeln (35) versehen ist, die auf der Oberfläche der Kessel-Stirnwand (4) aufliegen, und daß in der Stirnwand (4) Ausschnitte für den Durchtritt der Sockel (35) vorgesehen sind.

8. Strahlungskessel nach Anspruch 1 bis 7, bei welchem die Strahlungsfüllung, der Verteiler, die Wärmetauschrohre und der Rost ein Heizsystem bilden, dadurch gekennzeichnet, daß mehrere Heizsysteme (38) mit gesonderten Verteilern und Flüssigkeitsbehältern in einem gemeinsamen Verbrennungsraum (12) angeordnet sind, der von Umfangsrohren (2) umgeben ist, wobei zwischen den einzelnen Heizsystemen (38) ein System von Zwischenrohren (40) angeordnet ist.

9. Strahlungskessel nach Anspruch 1 bis 8, dadurch gekennzeichnet, daß im oberen Teil des Kessels unter dem zentralen Verteiler (24) ein Deflektor (19) angebracht ist, dessen wirksame Fläche sich in der Richtung nach unten erweitert.

Fig.1

0 261 622

**Fig.2**

# Fig.3

**Fig.4**

**Fig.5**

Fig.6

0 261 622

Fig.7